(19) Europäisches Patentamt
European Patent Office
Office européen des brevets

(11) **EP 2 137 850 B1**

(12) **EUROPEAN PATENT SPECIFICATION**

(45) Date of publication and mention
of the grant of the patent:
**30.11.2011  Bulletin 2011/48**

(51) Int Cl.:
**H04B 10/26** [(2006.01)]

(21) Application number: **08719877.6**

(22) Date of filing: **13.03.2008**

(86) International application number:
**PCT/IE2008/000019**

(87) International publication number:
**WO 2008/111034 (18.09.2008 Gazette 2008/38)**

(54) **AN OPTICAL COMMUNICATION SYSTEM**

OPTISCHES KOMMUNIKATIONSSYSTEM

SYSTÈME DE COMMUNICATION OPTIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.03.2007  IE 20070167**

(43) Date of publication of application:
**30.12.2009  Bulletin 2009/53**

(73) Proprietor: **University College Cork-National University of Ireland, Cork Cork (IE)**

(72) Inventors:
• **TALLI, Giuseppe**
  **Cork (IE)**
• **ELLIS, Andrew**
  **Cork (IE)**
• **TOWNSEND, Paul**
  **County Cork (IE)**
• **CHOW, Chi Wai**
  **Hsinchu 30010 (TW)**

(74) Representative: **Lucey, Michael
PURDYLUCEY
Intellectual Property
Suite 138-139
The Chapel Building
Mary's Abbey
Dublin 7 (IE)**

(56) References cited:
**EP-A- 0 717 516     EP-A- 0 905 926**

• **DONG Y ET AL: "A Novel PSK-Manchester Modulation Format in 10-Gb/s Passive Optical Network System With High Tolerance to Beat Interference Noise" IEEE PHOTONICS TECHNOLOGY LETTERS, IEEE SERVICE CENTER, PISCATAWAY, NJ, US, vol. 17, no. 5, 1 May 2005 (2005-05-01), pages 1118-1120, XP011130772 ISSN: 1041-1135**
• **WOOD T H ET AL: "OBSERVATION OF COHERENT RAYLEIGH NOISE IN SINGLE-SOURCE BIDIRECTIONAL OPTICAL FIBER SYSTEMS" JOURNAL OF LIGHTWAVE TECHNOLOGY, IEEE SERVICE CENTER, NEW YORK, NY, US, vol. 6, no. 2, 1 February 1988 (1988-02-01), pages 346-352, XP000867170 ISSN: 0733-8724**
• **STAUBLI R K ET AL: "Crosstalk Penalties Due to Coherent Rayleigh Noise in Bidirectional Optical Communication Systems" JOURNAL OF LIGHTWAVE TECHNOLOGY, IEEE SERVICE CENTER, NEW YORK, NY, US, vol. 9, no. 3, 1 March 1991 (1991-03-01), pages 375-380, XP009021939 ISSN: 0733-8724**
• **KIM H ET AL: "Bidirectional Subcarrier-Multiplexed Transmission System Using Unisolated Optical Sources" IEEE PHOTONICS TECHNOLOGY LETTERS, IEEE SERVICE CENTER, PISCATAWAY, NJ, US, vol. 11, no. 11, 1 November 1999 (1999-11-01), XP011046836 ISSN: 1041-1135**

**Description**

The invention relates to optical communication networks such as passive optical networks (PONs).

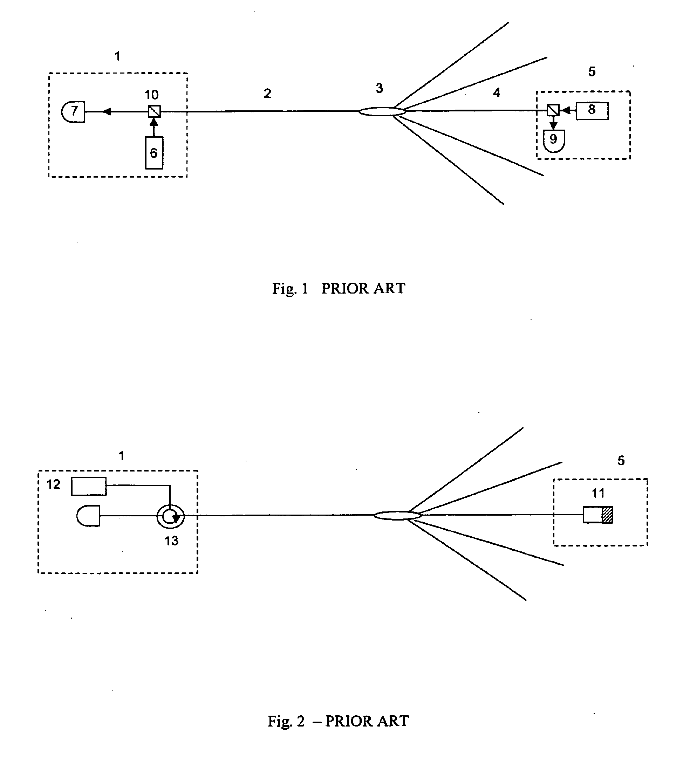

Fig. 1 shows a conventional PON which consists of a network head end station (1), which is linked by means of a feeder fibre (2) to a passive optical splitter (3), the outputs of which are connected by means of drop fibres (4) to a plurality of end user stations (5). The head end station contains a laser source (6) for generating downstream signals and an optical receiver (7) for detecting upstream signals. Similarly the end user stations contain a laser (8) for generating upstream signals and an optical receiver (9) for detecting downstream signals. Typically the upstream and downstream communication channels operate at different wavelengths, $\lambda_{up}$ and $\lambda_{down}$, so that they can be combined and separated using optical filters (10) known as wavelength division multiplexers (WDMs). To avoid contention and cross talk a time-division-multiple-access protocol is employed on the network so that at any given time only one end user is transmitting signals in the upstream direction.

Fig. 2 shows an alternative version of this network where the lasers in the end user stations have been replaced by reflective optical modulators (11) and an extra laser source (12) has been added to the head end station as well as an optical circulator (13) or coupler (only upstream channel is shown, for clarity, downstream configuration remains as is Fig. 1). The additional laser supplies a continuous wave (cw) optical 'carrier' to all of the end users, which is modulated by means of the reflective modulators to generate the upstream data signals. The modulators may optionally contain an optical amplifier, or amplifiers, in order to boost the user data signals to overcome the effects of loss in the network (arising, for example, from splitting loss). In applications where the end users need to have precisely matched wavelengths this scheme has the potential advantage that only one wavelength specified source (12) is required for the network as a whole rather than one per user. This can have major cost advantages as such sources are typically expensive. However, a disadvantage of such networks is that the upstream channel requires bidirectional or counter-propagation of light with the same centre wavelength in the network (the carrier and the upstream signals). Hence the systems are susceptible to interferometric beat noise generated by Rayleigh back-scattering (RB) and back-reflections from components in the fibre path, which can lead to impairments [2, 3] if suitable mitigation schemes are not employed. This can lead to Rayleigh scattering-induced noise that may prevent operation of the network.

Rayleigh backscattering (RB) is a phenomenon that occurs in optical fibres when a fraction of the incident light is scattered in the reverse direction by microscopic index variations in the glass medium. The total backscattered power $P_R$ is given by

$$P_R = \frac{P_0 \gamma S}{2\alpha}\left(1 - e^{-2\alpha L}\right) \qquad (1),$$

where $P_0$ is the incident optical power coupled into the fiber, $\gamma$ is the fractional power loss per unit length due to Rayleigh scattering, $S$ is the fraction of this power that is recaptured by the fibre, a is the loss coefficient per unit length and $L$ is the fibre length. For standard telecommunications fibre at a wavelength of 1550nm: $\alpha$=4.6×10⁻²km⁻¹ ($\equiv$0.2dB/km), $\gamma$=2.7×10⁻²km⁻¹ ($\equiv$0.12dB/km) and $S$=2.27×10⁻³, giving a ratio $P_R/P_0$ =6.71×10⁻⁴ ($\equiv$31.7dB) in the long fibre limit where the exponential term in (1) tends to zero.

In bidirectional optical communication schemes Rayleigh backscattering can lead to dramatic signal impairments that, if not controlled, can render the system inoperable. These impairments arise from interference of the Rayleigh light with the signal light at the receiver, such that total received power is given by:

$$P_{Tot} = P_R + P_S + 2\sqrt{P_R P_S}\cos\theta \qquad (2),$$

where $P_S$ is the signal power and $\theta$ is the phase angle between the Rayleigh and the signal light. The phase angle varies due to the finite linewidth of the light source and due to environmental changes in the fibre, which results in random fluctuations of the instantaneous power, the variance of which is given by:

$$\left\langle \Delta P_{Tot}^2 \right\rangle \cong 2 P_R P_S \qquad (3).$$

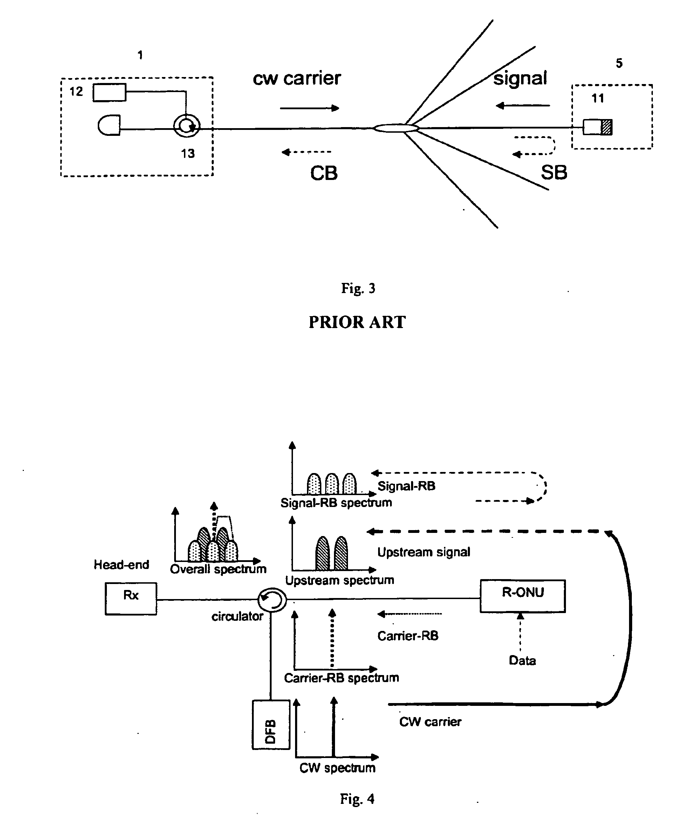

These equations show that even if the Rayleigh power is 100 times smaller than the signal power the total power can vary by as much as $\pm$ 20%. These fluctuations lead in turn to noise in the receiver photocurrent, and the portion of this noise that falls within the receiver bandwidth can generate errors in the signal transmission. Rayleigh scattering does not typically cause impairments in the type of PON shown in Fig. 1. This is because the upstream and downstream channels operate at different wavelengths so backscattered light generated by the downstream signal is blocked from from entering the upstream receiver at the head end station by the optical filter action of the WDM (10), and similarly for the upstream signal. However, in schemes such as those shown in Figs. 2 and 3 where there is bidirectional propagation in the fibre at the same wavelength then simple optical filtering is not possible and Rayleigh-induced impairments can occur.

In the case of bidirectional passive optical networks using reflective modulators such as those shown in Figs. 2 and 3 there are two distinct sources of Rayleigh light that need to be considered: firstly Rayleigh generated by the unmodulated optical carrier travelling in the downstream direction and secondly Rayleigh generated by the modulated signal as it travels upstream. The latter passes back through the modulator where it is reflected and amplified (in the case where the modulator has net gain) so that it is now co-propagating with the signal in the upstream direction. The two processes are shown schematically in Fig. 3. The spectra of the upstream signal and these two RB components are all different:t the carrier RB has the narrow spectrum characteristic of the the CW laser, the upstream signal is broadened by the application of data modulation, which generates modulation-induced sidebands and the signal RB is broadened further by passge back through the modulator (where it is modulated a second time).

References

[1] US4,879,763
[2] T. H. Wood et al., "Observation of coherent Rayleigh noise in single-source bidirectional optical fiber systems", J. Lightwave Tech., 6, 346-352 (1988)
[3] "Crosstalk penalties due to coherent Rayleigh noise in bi-directional optical communication systems", R. K. Staubli, and P. Gysel, J. Lighwave Tech., 9, 375-380 (1991)
[4] "A Novel PSK-Manchester Modulation Format in 10Gb/s Passive Optical Network System with High Tolerance to Beat interference Noise" Zhihong Li et al.

Statements of Invention

According to the invention, there is provided an optical transmitter of the reflective modulation type, the transmitter having a means of generating reflection, a mixer for mixing a data stream and a sub-carrier, and an optical modulator for modulating an optical carrier with the output from the mixer in order to avoid optical beat-interference noise.

In one embodiment, the modulator is of the interferometric type, comprising means for suppressing the optical carrier at the transmitter output in order to reduce optical beat interference noise.

In one embodiment, the modulator is a Mach Zehnder Modulator (MDM).

In one embodiment, the modulator comprises means for implementing CSS-AMPSK modulation, which suppresses optical beat noise and achieves strong dispersion tolerance.

In one embodiment, the transmitter further comprises an encoder for encoding the data prior to mixing with the sub-carrier.

In one embodiment, the encoder is a duobinary encoder.

In one embodiment, the encoder comprises a low pass filter.

In one embodiment, the low pass filter has a cut-off frequency of approximately ¼ the data rate.

In one embodiment, the sub-carrier frequency is greater than or equal to the data rate.

In one embodiment, the sub-carrier frequency is greater than or equal to twice the data rate.

In one embodiment, the sub-carrier frequency is not synchronised with the data frequency.

In one embodiment, the output amplitude from the mixer is not precisely controlled and may vary.

In one embodiment, the output amplitude varies from 0.6 to 2Vpi, in which Vpi is the output amplitude required to obtain a pi phase shift in the modulator.

Detailed Description of the Invention

The invention will be more clearly understood from the following description of some embodiments thereof, given by way of example only with reference to the accompanying drawings in which:-

Figs. 1 to 3 are diagrams concerning the prior art, as set out above;

Fig. 4 is a diagram showing a modulation scheme of the invention in a PON;

Figs. 5 to 7 are diagrams showing further embodiments; and

Figs. 8 to 10 are plots showing experimental and simulation results demonstrating advantages of the invention.

An optical transmitter of the invention is of the reflective modulation type. The transmitter has a means of generating reflection, a mixer for mixing a data stream and a sub-carrier, and an optical modulator for modulating an optical carrier with the output from the mixer in order to avoid optical beat-interference noise arising from, for example, Rayleigh backscattering.

The modulator is in one embodiment of the interferometric type such as a Mach-Zehnder Modulator (MZM) operated to suppress the optical carrier at the transmitter output in order to reduce optical beat interference noise.

The modulator preferably implements CSS-AMPSK modulation, which suppresses optical beat noise and achieves strong dispersion tolerance, enabling, for example, 10Gb/s data transmission over 100km distance without dispersion compensation. In the embodiments of Figs. 4 to 6, the transmitter also has a duobinary encoder, which encodes the data prior to mixing with the sub-carrier. The duobinary encoder is, for example, a low pass filter with a cut-off frequency of approximately ¼ the data rate. The sub-carrier frequency is preferably greater than or equal to the data rate and preferably greater than or equal to twice the data rate. The sub-carrier frequency need not be synchronised with the data frequency. The output amplitude from the mixer is not precisely controlled and may vary for example from 0.6 to 2Vpi, where Vpi is the output amplitude required to obtain a pi phase shift in the MZM.

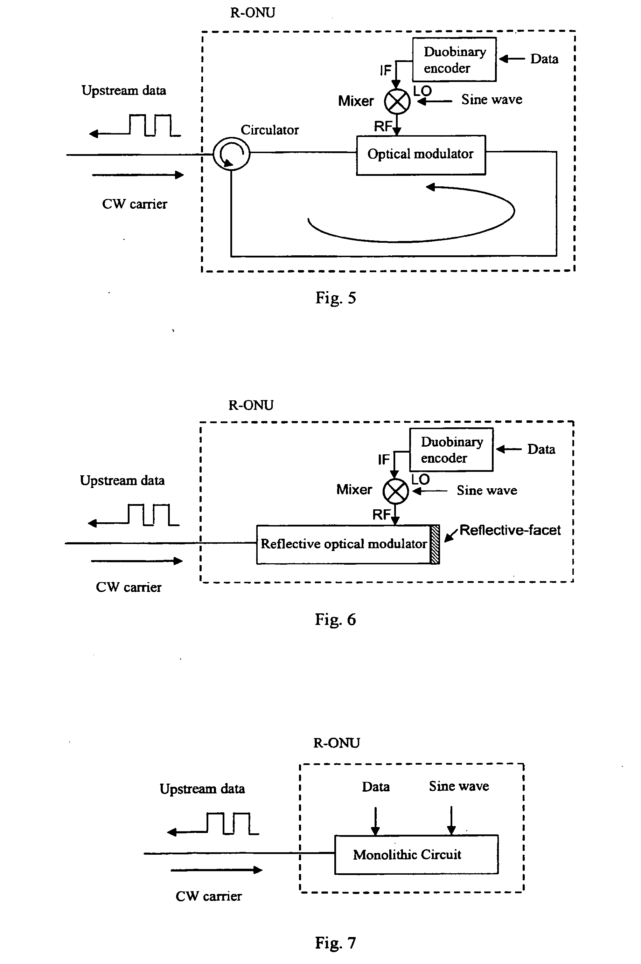

In more detail, referring to Fig. 5 a transmitter comprises a duobinary encoder for encoding the data, a mixer for mixing it with a sine wave carrier, and a Mach Zehnder Modulator (MDM). The latter implements a carrier-suppressed-sub-carrier, amplitude-modulation-phase-shift-keying (CSS-AMPSK) reflective modulation scheme. Interferometric noise at the Rx is reduced for both components of the RB, due to the reduced spectral overlap between the upstream signal and the carrier RB and signal RB. Offset optical filtering can also be used to improve the noise suppression. In addition excellent dispersion tolerance is obtained due to the use of the spectrally-compact AMPSK modulation format, which increases maximum achievable transmission distance (compared to NRZ modulation).

Figs. 5 to 7 show different CSS-AMPSK implementations within a reflective optical networking unit (R-ONU). Referring to Figs. 5 and 6, the R-ONUs contain a double balanced radio frequency (RF) mixer, an electrical low pass filter (LPF) (not shown), and an optical modulator-in this case a Mach-Zehnder modulator (MZM). A sine wave of frequency $f_{sin}$ is connected to the local oscillator (LO) input of the mixer and digital baseband data of frequency $f_{data}$ is connected to the intermediate frequency (IF) input of the mixer. The data is effectively duobinary encoded by passing it through the LPF, which has a bandwidth approximately equal to $f_{data}/4$. The mixed signal is used to drive an MZM biased at its transmission minimum generating two AMPSK modulated sub-carriers at $\pm f_{sin}$. This bias condition also minimizes the amplitudes of the zero and even numbered harmonics, as shown in Fig. 4.

The transmitter of Fig. 5 has a reflector in a circulator, whereas the transmitter of Fig. 6 has an integral reflector, namely a reflective facet of the modulator.

The implementation of Fig. 7 is a potentially lower cost version, in which the mixer and the LPF are both integrated with the MZM modulator. This may be achieved using semiconductor technology to hybridly- or monolithically-integrate the required optical and electronic sub-components together in a single device.

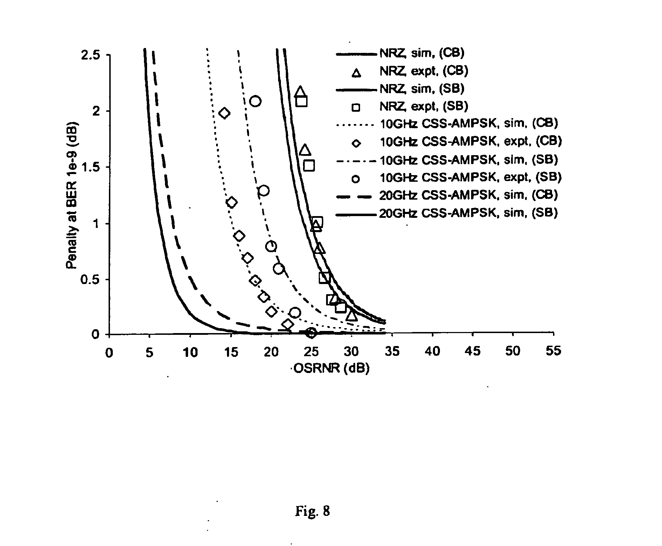

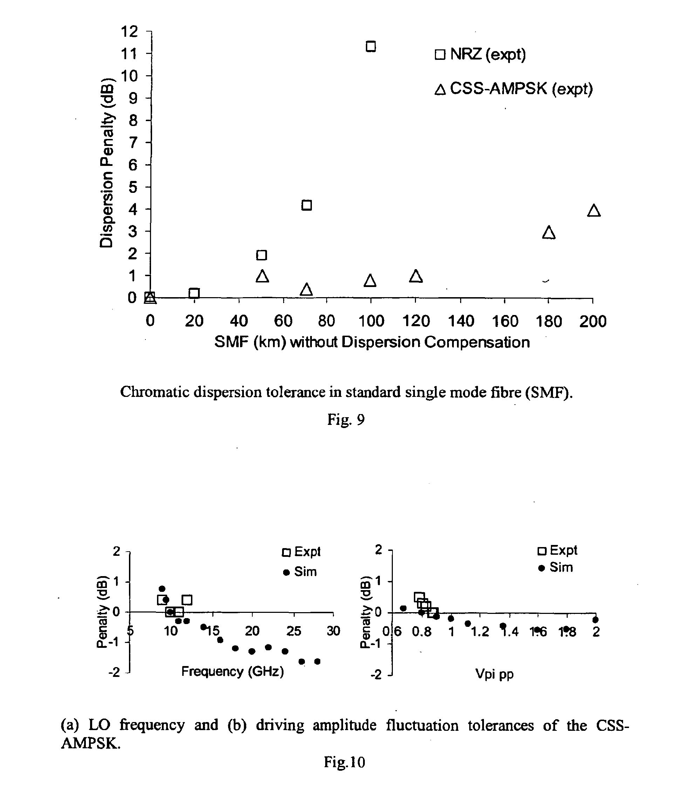

Figs. 8 to 10 show simulation and experimental results, which demonstrate the key advantages of the invention. Fig.8. shows the increase in receiver power penalty for 10Gb/s data as the optical signal to Rayleigh noise ratio (OSNR) is degraded. The results demonstrate that the CSS-AMPSK modulation scheme is significantly more tolerant to Rayleigh noise than conventional non-return to zero (NRZ) modulation (PRIOR ART) and that the degree of noise suppression is higher when the subcarrier frequency is increased from 10GHz to 20GHz. Fig.9 shows the receiver power penalty for 10Gb/s data as a function of transmission distance over standard fibre (SMF) and demonstrates the superior chromatic dispersion tolerance of CSS-AMPSK compared to NRZ modulation. Fig. 10 shows the receiver power penalties for CSS-AMPSK as a function of LO frequency (a) and modulator drive amplitude (b). The results demonstrate that the receiver power penalty remains small (<1dB) even if variations in LO frequency and modulator drive amplitude are large.

CSS-AMPSK is a modulation format for applications using reflective modulators optimised for Rayleigh noise suppression. CSS-AMPSK is thus suited for applications in PONs using reflective modulators.

The mitigation of the Rayleigh interferometric noise is obtained because the CSS-AMPSK signal has less spectral overlap with the Rayleigh components, reducing the total noise power in the Rx. In the Carrier-RB case the optical power is concentrated at the CW carrier frequency, while the CSS-AMPSK signal concentrates the power in sub-carriers at $\pm f_{sin}$ When $f_{sin}$ is chosen to be higher than the Rx bandwidth the beat noise between signal and Carrier-RB is attenuated by the receiver frequency response. For the mitigation of Signal-RB, when the CSS-AMPSK is re-modulated, the odd-harmonics become even-harmonics. Hence, the spectral overlap of the upstream signal and the Signal-RB is small and the beat noise is attenuated by the receiver frequency response when $f_{sin}$ is chosen to be greater than or equal to 2 $f_{data}$.

Excellent dispersion tolerance is obtained due to the use of the spectrally-compact AMPSK modulation format, which increases the maximum achievable transmission distance (compared to NRZ modulation). The dispersion tolerance can be further increased by optically filtering one of the two sub-carrier bands to reduce the effect of sub-carrier fading. Due to high dispersion tolerance CSS-AMPSK modulation format is suited for high bit rate and long reach networks.

CSS-AMPSK combines Rayleigh noise suppression and dispersion tolerance making it suited for applications in long reach PONs using reflective modulators.

A single modulator MZM is used to generate AMPSK modulation format, which reduces the cost of end user stations. Possible integration of modulator, mixer and LPF offers a lower cost solution.

The CSS-AMPSK offers other practical advantages, including good tolerance to subcarrier frequency, $f_{sin}$, and drive voltage variations. Hence, the sine wave (sub-carrier) for the mixer need not be synchronized with the electrical data and may either be generated from the downstream data signals using a clock recovery unit, or via a free running local oscillator. The lack of drive voltage sensitivity can be understood from the following example: as the drive voltage is increased the third harmonic sub-carrier components will start to grow, but the low spectral overlaps between signal and RB components are still maintained and noise suppression is still achieved. CSS-AMPSK is a modulation format for applications using reflective modulators optimised for Rayleigh noise suppression.

It will be appreciated that mitigation of the Rayleigh interferometric noise is obtained because the CSS-AMPSK signal has less spectral overlap with the Rayleigh components, reducing the total noise power in the Rx. In the Carrier-RB case the optical power is concentrated at the CW carrier frequency, while the CSS-AMPSK signal concentrates the power in sub-carriers at $\pm f_{sin}$. When $f_{sin}$ is chosen to be higher than the Rx bandwidth the beat noise between signal and Carrier-RB is attenuated by the receiver frequency response. For the mitigation of Signal-RB, when the CSS-AMPSK is re-modulated, the odd-harmonics become even-harmonics. Hence, the spectral overlap of the upstream signal and the Signal-RB is small and the beat noise is attenuated by the receiver frequency response when $f_{sin}$, is chosen to be higher than 2 $f_{data}$.

Excellent dispersion tolerance is obtained due to the use of the spectrally-compact AMPSK modulation format, which increases maximum achievable transmission distance (compared to NRZ modulation). The dispersion tolerance can be increased filtering optically one of the two sub-bands by reducing the sub-carrier fading. Due to high dispersion tolerance CSS-AMPSK modulation format is suited for high bit rate and long reach networks.

CSS-AMPSK combines Rayleigh noise suppression and dispersion tolerance making it suited for applications in long reach PONs using reflective modulators.

A single modulator MZM is used to generate AMPSK modulation format, which reduces the cost of end user stations. Possible integration of modulator, mixer and LPF offers a lower cost solution.

The CSS-AMPSK offers other practical advantages, including good tolerance to subcarrier frequency, $f_{sin}$, and drive voltage variations. Hence, the sine wave (sub-carrier) for the mixer does not require to be synchronized with the electrical data and may either be generated from the downstream using a clock recovery unit, or via a free running local oscillator.

**Claims**

1. An optical transmitter of the reflective modulation type, the transmitter having a means of generating reflection, **characterised by**: a mixer for mixing a data stream and a subcarrier, and an optical modulator for modulating an optical carrier with the output from the mixer in order to avoid optical beat-interference noise.

2. An optical transmitter as claimed in claim 1, wherein the modulator is of the interferometric type, comprising means for suppressing the optical carrier at the transmitter output in order to reduce optical beat interference noise.

3. An optical transmitter as claimed in claim 2, wherein the modulator is a Mach Zehnder Modulator (MDM).

4. An optical transmitter as claimed in any preceding claim, wherein the modulator comprises means for implementing CSS-AMPSK modulation, which suppresses optical beat noise and achieves strong dispersion tolerance.

5. An optical transmitter as claimed in any preceding claim, wherein the transmitter further comprises an encoder for encoding the data prior to mixing with the sub-carrier.

6. An optical transmitter as claimed in claim 5, wherein the encoder is a duobinary encoder.

7. An optical transmitter as claimed in either of claim's 5 or 6 wherein the encoder comprises a low pass filter.

8. An optical transmitter as claimed in claim 7, wherein the low pass filter has a cut-off frequency of approximately ¼ the data rate.

9. An optical transmitter as claimed in any preceding claim, wherein the subcarrier frequency is greater than or equal to the data rate.

10. An optical transmitter as claimed in claim 9, wherein the sub-carrier frequency is greater than or equal to twice the data rate.

11. An optical transmitter as claimed in any preceding claim, wherein the subcarrier frequency is not synchronised with the data frequency.

12. An optical transmitter as claimed in any preceding claim, wherein the output amplitude from the mixer is not precisely controlled and may vary.

13. An optical transmitter as claimed in claim 12, wherein the output amplitude varies from 0.6 to 2Vpi, in which Vpi is the output amplitude required to obtain a pi phase shift in the modulator.


**Patentansprüche**

1. Optischer Sender des Reflexionsmodulationstyps, wobei der Sender ein Mittel zum Erzeugen von Reflexionen umfasst, **gekennzeichnet durch** einen Mischer zum Mischen eines Datenstroms und eines Subträgers und einen optischen Modulator zum Modulieren eines optischen Trägers mit dem Ausgang vom Mischer, um OBI-(Optical Beat Interference)-Rauschen zu vermeiden.

2. Optischer Sender nach Anspruch 1, wobei der Modulator vom interferometrischen Typ ist, umfassend Mittel zum Unterdrücken des optischen Trägers am Senderausgang, um OBI-Rauschen zu reduzieren.

3. Optischer Sender nach Anspruch 2, wobei der Modulator ein Mach Zehnder Modulator (MDM) ist.

4. Optischer Sender nach einem der vorherigen Ansprüche, wobei der Modulator Mittel zum Implementieren von CSS-AMPSK-Modulation umfasst, die OBI-Rauschen unterdrückt und eine starke Dispersionstoleranz erzielt.

5. Optischer Sender nach einem der vorherigen Ansprüche, wobei der Sender ferner einen Codierer zum Codieren der Daten vor dem Mischen mit dem Subträger umfasst.

6. Optischer Sender nach Anspruch 5, wobei der Codierer ein Duobinär-Codierer ist.

7. Optischer Sender nach Anspruch 5 oder 6, wobei der Codierer ein Tiefpassfilter umfasst.

8. Optischer Sender nach Anspruch 7, wobei das Tiefpassfilter eine Grenzfrequenz von etwa ¼ der Datenrate hat.

9. Optischer Sender nach einem der vorherigen Ansprüche, wobei die Subträgerfrequenz gleich der oder größer als die Datenrate ist.

10. Optischer Sender nach Anspruch 9, wobei die Subträgerfrequenz gleich dem oder größer als das Zweifache(n) der Datenrate ist.

11. Optischer Sender nach einem der vorherigen Ansprüche, wobei die Subträgerfrequenz nicht mit der Datenfrequenz synchronisiert ist.

12. Optischer Sender nach einem der vorherigen Ansprüche, wobei die Ausgangsamplitude vom Mischer nicht präzise geregelt wird und variieren kann.

13. Optischer Sender nach Anspruch 12, wobei die Ausgangsamplitude von 0,6 bis 2 Vpi variiert, wobei Vpi die Ausgangsamplitude ist, die zum Erhalten einer pi-Phasenverschiebung im Modulator benötigt wird.

**Revendications**

1. Un émetteur optique du type à modulation réflective, l'émetteur possédant un moyen de génération d'une réflexion, **caractérisé par** : un mélangeur destiné à mélanger un train de données et une sous-porteuse, et un modulateur optique destiné à moduler une porteuse optique avec la sortie provenant du mélangeur afin d'éviter un bruit d'interférence dû au battement optique.

2. Un émetteur optique selon la Revendication 1, où le modulateur est du type interférométrique, comprenant un moyen de suppression de la porteuse optique à la sortie de l'émetteur afin de réduire le bruit d'interférence dû au battement optique.

3. Un émetteur optique selon la Revendication 2, où le modulateur est un modulateur Mach-Zehnder (MDM).

4. Un émetteur optique selon l'une quelconque des Revendications précédentes, où le modulateur comprend un moyen de mise en oeuvre d'une modulation CSS-AMPSK, qui supprime le bruit dû au battement optique et atteint une forte tolérance à la dispersion.

5. Un émetteur optique selon l'une quelconque des Revendications précédentes, où l'émetteur comprend en outre un codeur destiné à coder les données avant le mélange avec la sous-porteuse.

6. Un émetteur optique selon la Revendication 5, où le codeur est un codeur duobinaire.

7. Un émetteur optique selon la Revendication 5 ou 6, où le codeur comprend un filtre passe-bas.

8. Un émetteur optique selon la Revendication 7, où le filtre passe-bas possède une fréquence de coupure d'environ ¼ du débit de données.

9. Un émetteur optique selon l'une quelconque des Revendications précédentes, où la fréquence de la sous-porteuse est supérieure ou égale au débit de données.

10. Un émetteur optique selon la Revendication 9, où la fréquence de la sous-porteuse est supérieure ou égale à deux fois le débit de données.

11. Un émetteur optique selon l'une quelconque des Revendications précédentes, où la fréquence de la sous-porteuse n'est pas synchronisée avec la fréquence des données.

12. Un émetteur optique selon l'une quelconque des Revendications précédentes, où l'amplitude de sortie provenant du mélangeur n'est pas commandée avec précision et peut varier.

13. Un émetteur optique selon la Revendication 12, où l'amplitude de sortie varie de 0,6 à 2Vpi, où Vpi est l'amplitude de sortie requise pour obtenir un déphasage pi dans le modulateur.

Fig. 1   PRIOR ART

Fig. 2  – PRIOR ART

**Fig. 3**

**PRIOR ART**

**Fig. 4**

R-ONU

Upstream data

CW carrier

Circulator

Duobinary encoder ← Data

IF

Mixer ⊗ LO ← Sine wave

RF

Optical modulator

Fig. 5

R-ONU

Upstream data

CW carrier

Duobinary encoder ← Data

IF

Mixer ⊗ LO ← Sine wave

RF

Reflective optical modulator — Reflective-facet

Fig. 6

R-ONU

Upstream data

CW carrier

Data      Sine wave

Monolithic Circuit

Fig. 7

Fig. 8

Chromatic dispersion tolerance in standard single mode fibre (SMF).

Fig. 9

(a) LO frequency and (b) driving amplitude fluctuation tolerances of the CSS-AMPSK.

Fig.10

EP 2 137 850 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4879763 A

**Non-patent literature cited in the description**

- **T. H. WOOD et al.** Observation of coherent Rayleigh noise in single-source bidirectional optical fiber systems. *J. Lightwave Tech.,* 1988, vol. 6, 346-352
- **R. K. STAUBLI ; P. GYSEL.** Crosstalk penalties due to coherent Rayleigh noise in bi-directional optical communication systems. *J. Lighwave Tech.,* 1991, vol. 9, 375-380
- **ZHIHONG LI.** *A Novel PSK-Manchester Modulation Format in 10Gb/s Passive Optical Network System with High Tolerance to Beat interference Noise*